# EUROPÄISCHE PATENTSCHRIFT

(11) **EP 0 450 506 B1**
(45) Veröffentlichungstag und Bekanntmachung des Hinweises auf die Patenterteilung: **02.02.1994**
(21) Anmeldenummer: 91104958.3
(22) Anmeldetag: 28.03.1991
(51) Int. Cl.: B23D 61/18

(54) **Sägeseil**
Wire saw
Fil à scier

(30) Priorität: 03.04.1990 AT 768/90
(43) Veröffentlichungstag der Anmeldung: 09.10.1991
(73) Patentinhaber: Tyrolit Schleifmittelwerke Swarovski KG, 6130 Schwaz (AT)
(72) Erfinder: Pfister, Johann, A-6263 Hart i.Z. (AT); Daum, Karl, A-6114 Kolsass (AT)
(74) Vertreter: Hofinger, Engelbert, DDr.

(56) Entgegenhaltungen:
- EP-A- 0 160 625
- EP-A- 0 306 952
- EP-A- 0 414 280
- DE-A- 2 451 153
- DE-A- 3 041 830
- FR-A- 2 495 535

## Beschreibung

Die Erfindung bezieht sich auf ein Sägeseil für eine Seilsäge insbesondere zum Schneiden von Naturstein, Mauerwerk od. dgl. mit einem vorzugsweise metallischen Seil auf dem mit Schneidkorn, beispielsweise Diamant, versehene Schneidperlen im Abstand voneinander angeordnet sind, wobei sich zwischen den Schneidperlen Abstandhülsen aus gieß- oder spritzfähigen Material befinden, deren Durchmesser kleiner als der Durchmesser der Schneidperlen ist, und die mit ringförmigen Stegen versehen sind.

Früher wurde Naturstein im Steinbruch oder im Werk mittels eines endlosen Stahlseiles geschnitten, wobei man in die Schnittfuge als abtragendes Medium einen abrasiven Schlamm eingebracht hat. Der Schneidvorgang war auf diese Art sehr langsam.

Es sind weiters Sägeseile zum Schneiden von Steinblöcken bekannt geworden, auf die sogenannte Schneidperlen aufgefädelt wurden. Die Schneidperlen weisen im allgemeinen einen metallischen Trägerkörper auf, wobei die Metallmasse mit Diamantensplittern versehen ist.

Die Schneidperlen wurden nach dem älteren Stand der Technik von Schraubenfedern im Abstand zueinander gehalten.

Aus der DE-A 3148065 ist ein diamantenbestücktes Seil zur schneidenden Bearbeitung von Steinwerkstoffen bekannt, bei dem die Schneidperlen auf einem Metallseil angeordnet sind und sich zwischen den Diamanten enthaltenen Schneiperlen Abstandhülsen befinden, die durch Sintern eines keine Diamanten enthaltenen Materials hergestellt wurden.

Aus der EP-A 160625 ist ein Sägeseil bekannt, bei dem die auf einem Metallseil angeordneten Schneidperlen in eine Schichte eines thermoplastischen Gummimaterials, die das Seil bedeckt, eingegossen sind. Auf diese Art und Weise werden die Schneidperlen im entsprechenden Abstand zueinander gehalten und machen außerdem eine rotierende Bewegung des Seiles mit.

Aus der die Beschreibung des nächstkommenden Standes der Technik darstellenden EP-A 306 952 ist ein Sägeseil bekannt, wobei zwischen den Schneidperlen ein Seilüberzug aus einem nachgiebigen Material, beispielsweise aus Gummi oder einem synthetischen Harz vorgesehen ist. Dieser Seilüberzug ist in einem Ausführungsbeispiel an seinen, den Schneidperlen benachbarten Enden mit ringförmigen Stegen versehen. Der Durchmesser der ringförmigen Stege ist jedoch kleiner als der Durchmesser der Schneidperlen.

Aufgabe der Erfindung ist es, ein Sägeseil der eingangs erwähnten Art dahingehend zu verbessern, daß eine gute Führung der Seilsäge im Schnittkanal erreicht wird.

Die erfindungsgemäße Aufgabe wird dadurch gelöst, daß der Durchmesser der Stege zumindestens annähernd gleich groß wie der Durchmesser der Schneidperlen ist.

Die Stege können sowohl mit den Abstandhülsen einstückig aus einem homogenen Material gefertigt sein oder von in die Abstandhülsen eingesetzten Metallscheiben gebildet werden.

Die Stege sind vorteilhaft relativ schmal, sodaß ihre Breite geringer als die Breite der Schneidperlen ist.

Ein Ausführungsbeispiel der Erfindung sieht vor, daß die Breite der Stege geringer als die Breite der Schneidperlen ist und sich die Stege im Abstand von den Schneidperlen befinden.

Nachfolgend werden zwei Ausführungsbeispiele der Erfindung anhand der Figuren der beiliegenden Zeichnungen beschrieben.

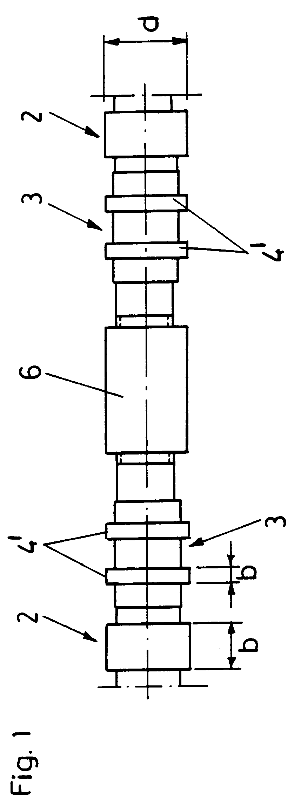

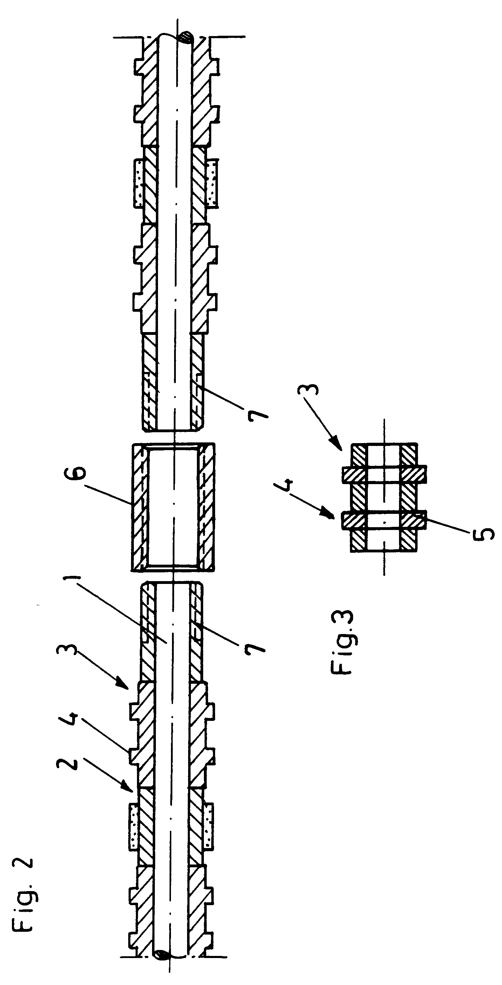

Die Fig. 1 zeigt eine Draufsicht auf ein erfindungsgemäßes Sägeseil. Die Fig. 2 zeigt einen Schnitt durch ein erfindungsgemäßes Sägeseil. Die Fig. 3 zeigt einen Schnitt durch eine Abstandhülse.

Der Grundkörper des erfindungsgemäßes Sägeseil ist ein aus mehreren Stahldrähten gefertiges Stahlseil 1. Auf diesem Stahlseil 1 sind in regelmäßigen Abständen die mit Diamantensplitter besetzten Schneidperlen 2 angeordnet. Zwischen je zwei Schneidperlen 2 befindet sich eine Abstandhülse 3 aus einem Kunststoffmaterial.

Die Abstandhülsen 3 sowie die Schneidperlen 2 sind in einem festen Verbund mit dem Stahlseil 1, sodaß die Schneidperlen 2 und die Abstandhülsen 3 auch Rotationsbewegungen des Stahlseiles 1 mitmachen.

Die Abstandhülsen 3 sind mit radialen Vorsprüngen, die von Stegen 4 gebildet werden, versehen.

Die Stege 4 sind wie in der Fig. 1 gezeigt, ringförmig.

Wie aus den Figuren der Zeichnung ersichtlich, sind die Stege 4 relativ schmal, sodaß ihre Breite b in etwa die Hälfte der Breite b der Schneidperlen 2 beträgt.

Auf einer Distanzhülse 3 sind vorteilhaft mehrere Ringstege 4 vorgesehen.

Wie aus der Fig. 3 ersichtlich sind die Stege 4 im Querschnitt rechteckig, sodaß ein kantiges Außenprofil der Abstandhülse 3 entsteht, was besonders gute Transporteigenschaften bewirkt. Gute Erfolge wurden bei verschiedenen Gesteinsorten auch mit Stegen 4 mit trapezförmigen Querschnitt erzielt.

Die Fig. 3 zeigt ein Ausführungsbeispiel, wobei die Stege 4 in der Abstandhülse 3 von in die Abstandhülse 3 eingebrachten Metallscheiben 5 gebildet werden.

In sämtlichen Ausführungsbeispielen ist der Außendurchmesser der Stege 4 annähernd gleich dem Außendurchmesser der Schneidperlen 2.

Da das Sägeseil als Endlosseil eingesetzt ist, ist noch eine Verschlußhülse 6 vorgesehen, mittels der die Seilenden 7 miteinander verbunden werden. Es können auch mehrere Seilstücke zu einem Sägeseil verbunden werden.

## Patentansprüche

1. Sägeseil für eine Seilsäge insbesondere zum Schneiden von Naturstein, Mauerwerk od. dgl. mit einem vorzugsweise metallischen Seil (1) auf dem mit Schneidkorn, beispielsweise Diamant, versehene Schneidperlen (2) im Abstand voneinander angeordnet sind, wobei sich zwischen den Schneidperlen Abstandhülsen (3) aus gieß- oder spritzfähigen Material befinden, deren Durchmesser kleiner als der Durchmesser der Schneidperlen ist, und die mit ringförmigen Stegen (4) versehen sind, dadurch gekennzeichnet, daß der Durchmesser (d) der Stege (4) zumindestens annähernd gleich groß wie der Durchmesser (d) der Schneidperlen (2) ist.

2. Sägeseil nach Anspruch 1, dadurch gekennzeichnet, daß die Stege (4) von in die Abstandhülsen (3) eingelegten Metallscheiben (5) gebildet werden.

3. Sägeseil nach Anspruch 1 oder 2, dadurch gekennzeichnet, daß in einem Längsschnitt durch das Sägeseil, die Schnittflächen der Stege (4) trapezförmig sind.

4. Sägeseil nach mindestens einem der Ansprüche 1-3, dadurch gekennzeichnet, daß die Breite (b) der Stege (4) geringer als die Breite (b) der Schneidperlen (2) ist und sich die Stege (4) im Abstand von den Schneidperlen (2) befinden.

## Claims

1. Saw wire for a wire saw, in particular for cutting natural stone, masonry or the like, with preferably a metal wire (1) on which cutting beads (2), which are provided with cutting particles, for example diamond, are arranged at a distance apart from each other, whereby between the cutting beads, spacing bushes (3) of material which can be cast or injected are located, the diameter of which is smaller than the diameter of the cutting beads, and which are provided with annular segments (4), characterised in that the diameter (d) of the segments (4) is at least approximately the same size as the diameter (d) of the cutting beads (2).

2. Saw wire according to claim 1, characterised in that the segments (4) are formed from metal plates (5) inserted in the spacing bushes (3).

3. Saw wire according to claim 1 or 2, characterised in that in a longitudinal section through the wire, the sectional surfaces of the segments (4) are trapeziform.

4. Saw wire according to at least one of claims 1 to 3, characterised in that the width (b) of the segments (4) is less than the width (b) of the cutting beads (2) and the segments (4) are located at a distance from the cutting beads (2).

## Revendications

1. Fil de scie à fil, destiné en particulier à la coupe de pierres naturelles, de cloisons maçonnées ou d'éléments semblables, composé, de préférence, d'un fil métallique (1) sur lequel sont fixées à intervalles réguliers des perles de coupe (2) avec des grains de coupe, par exemple à base de diamant, entre lesquelles s'intercalent des bagues (3) destinées à maintenir l'intervalle, faites d'un matériau susceptible d'être coulé ou injecté, dont le diamètre est inférieur à celui des perles de coupe, et qui sont munies d'entretoises circulaires caractérisées en ce que leur diamètre (d) est approximativement le même que le diamètre (d) des perles de coupe (2).

2. Fil de scie selon la revendication 1, caractérisé en ce que les entretoises (4) des bagues d'intervalles (3) sont formées par des rondelles métalliques incrustées (5).

3. Fil de scie selon les revendications 1 et 2, caractérisé en ce que, représentée en coupe suivant l'axe du fil de scie, la section en coupe des entretoises (4) est de forme trapézoïdale.

4. Fil de scie selon une au moins des revendications 1 à 3, caractérisé en ce que la largeur (b) de l'entretoise (4) est inférieure à la largeur (b) de la perle de coupe (2) et en ce que l'entretoise (4) est distante de la perle de coupe (2).
